# EUROPÄISCHE PATENTSCHRIFT

(11) **EP 3 478 390 B1**
(45) Veröffentlichungstag und Bekanntmachung des Hinweises auf die Patenterteilung: **29.04.2020**
(21) Anmeldenummer: 17739210.7
(22) Anmeldetag: 27.06.2017
(51) Int. Cl.: B01D 39/16

(54) **FILTERMEDIUM, BESCHICHTUNGLÖSUNG ZUM ERZEUGEN EINES BESCHICHTUNG EINES SOLCHEN FILTERMEDIUMS UND VERFAHREN ZUR HERSTELLUNG EINES SOLCHEN FILTERMEDIUMS**
FILTER MEDIUM, COATING SOLUTION FOR PRODUCING A COATING FOR SUCH A FILTER MEDIUM, AND METHOD FOR PRODUCING SUCH A FILTER MEDIUM
MOYEN DE FILTRATION, SOLUTION DE REVÊTEMENT POUR PRODUIRE UN REVÊTEMENT D'UN TEL MOYEN DE FILTRATION ET PROCÉDÉ POUR PRODUIRE UN TEL MOYEN DE FILTRATION

(30) Priorität: 01.07.2016 DE 102016212056
(43) Veröffentlichungstag der Anmeldung: 08.05.2019
(73) Patentinhaber: Mahle International GmbH, 70376 Stuttgart (DE)
(72) Erfinder: BÖNDEL, Eva, 70180 Stuttgart (DE); HEIN, Martin, 70499 Stuttgart (DE)
(74) Vertreter: BRP Renaud & Partner mbB Rechtsanwälte Patentanwälte Steuerberater
(86) Internationale Anmeldenummer: PCT/EP2017/065874
(87) Internationale Veröffentlichungsnummer: WO 2018/002062

(56) Entgegenhaltungen:
- WO-A1-03/039713
- WO-A1-2008/009651

## Beschreibung

Die vorliegende Erfindung betrifft ein Filtermedium mit einem Filtermaterial zum Filtern einer Fahrgastinnenraumluft eines Kraftfahrzeuges gemäß Anspruch 11. Die Erfindung betrifft außerdem ein Filterelement für einen Fahrgastinnenraumluftfilter einer Klimatisierungsanlage eines Fahrzeugs, das mit einem derartigen Filtermedium hergestellt ist. Weiter betrifft die vorliegende Erfindung eine Beschichtungslösung zum Erzeugen einer biofunktionalen Oberflächenbeschichtung und/oder Tiefenbeschichtung eines Filtermediums. Schließlich betrifft die Erfindung ein Verfahren zur Herstellung eines derartigen Filtermediums durch Beschichtung eines derartigen Filtermaterials.

Aus dem Stand der Technik sind Filtermedien zur Reinigung der Fahrgastinnenraumluft in einer Vielzahl von Ausführungsvarianten allgemein bekannt. Mit modernen Klimatisierungsanlagen ist es sowohl möglich, den Fahrgastinnenraum mit angesaugter und gefilterter Luft von außen sowie im Umluftbetrieb mit der im Fahrzeuginnenraum vorhanden Luft oder einer Mischung von beiden zu belüften. Filtermedien haben die Aufgabe, die von außen angesaugte Luft, welche heutzutage mit einer Vielzahl von für den Menschen schädlichen Partikeln versehen ist, zu filtern bzw. zu reinigen. Die unerwünschten zum Teil schädlichen Schwebestoffe in der Luft sind in der Regel Krankheitserreger, Pollen, Stäube oder Gase. Durch die hohe Anzahl an unterschiedlichen Verunreinigungen in der Luft besteht der allgemeine Bedarf an Filtern, welche möglichst eine Großzahl der Verunreinigungen aus der Luft binden und an einem Einströmen in den Fahrgastinnenraum hindern. Ein häufig auftretendes Problem stellt hierbei die Adsorption von Geruchsstoffen dar, die auch als "reale Gase" bezeichnet werden und die vorwiegend basische Grundmoleküle wie beispielsweise Ammoniak, Trimethylamin oder Triethylamin aufweisen.

Aus der DE 10 2013 021 071 A1 ist ein Filtermedium, insbesondere zur Filterung von Luft für den Innenraum von Kraftfahrzeugen, bekannt. Das Filtermedium umfasst eine Filterschicht zum Zurückhalten von Partikeln sowie einen antimikrobiellen Stoff und einen antiallergenen Stoff. Der antimikrobielle Stoff wie auch der antiallergene Stoff sind als zusätzliche Schichten vorgesehen, welche mit der Filterschicht zum Zurückhalten von Partikeln in einer beliebigen Anordnung benachbart sind. Die hierbei verwendeten antibakteriellen Stoffe weisen insbesondere Zink-Pyrithion und Octa-isothiazolon auf.

Aus der EP 1 882 511 A3 ist ein Filtermedium mit bakterizider Wirkung, insbesondere zur Filterung von Luft für den Innenraum von Kraftfahrzeugen, bekannt. Das Filtermedium besteht aus mindestens einer Filterschicht, in der partikuläre Verunreinigungen zurückhaltbar sind, und einer dieser Filterschicht nachgeschalteten bakteriziden Schicht. Die bakterizide Schicht ist auf der Reinluftseite der mindestens einen Filterschicht angebracht und durch eine Abstandsschicht von der mindestens einen Filterschicht beabstandet.

Aus der DE 10 2011 104 628 A1 ist ein Filtermedium mit antimikrobieller Wirkung, insbesondere zur Filterung von Luft für den Innenraum von Kraftfahrzeugen, bekannt. Das Filtermedium besteht aus mindestens einer ersten Filterschicht, in der Verunreinigungen zurückhaltbar sind, und einer dieser ersten Filterschicht benachbarten zweiten Filterschicht. Die zweite Filterschicht ist auf der Abströmseite der ersten Filterschicht aufgebracht und enthält antimikrobielle Stoffe.

Aus der WO 2003/039713 A1 ist ein antipathogenes Luftfiltrationsmedium, insbesondere für ein Luftaufbereitungssystem in Gebäuden, bekannt. Das Luftfiltrationsmedium weist ein Fasersubstrat mit einer Vielzahl von verwirbelten Fasern auf, die wiederum mit einem Polymer beschichtet sind. Diese Beschichtung bietet eine Umgebung, die eine anti-pathogene Substanz umfassen kann.

Ein weiteres häufig auftretendes Problem bei Filtermedien, insbesondere bei Anwendung in einer Fahrzeugklimaanlage, ist, dass beispielsweise Bakterien, Keime, Pilze, Algen und sonstige Mikroorganismen sich in einem derartigen Filtermaterial ansammeln und vermehren können. Diese für den Menschen zum Teil schädlichen Mikroorganismen können durch den Luftstrom in den Innenraum des Fahrzeugs gelangen, wodurch die Fahrzeuginsassen diesen teils schädlichen Organismen schutzlos ausgesetzt sind.

Die vorliegende Erfindung beschäftigt sich mit dem Problem, für ein Filtermedium der eingangs genannten Art beziehungsweise für ein Filterelement für einen Fahrgastinnenraumluftfilter einer Klimatisierungsanlage eines Fahrzeugs, das mit einem derartigen Filtermedium hergestellt ist, eine verbesserte Ausführungsform anzugeben, die sich insbesondere vorteilhaftig in Bezug auf die Problematik des Wachstums und der Vermehrung von Mikroorganismen im Filtermedium auszeichnet. Ferner beschäftigt sich die Erfindung mit dem Problem der kontinuierlichen und vorbestimmten Freisetzung von antiallergenen und antibakteriellen Wirkstoffen bei einer biofunktionalen Beschichtung eines Filtermaterials.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einem Filtermedium mit einem Filtermaterial eine anti-pathogene Substanz sowie einen Ionenaustauscher, der in Verbindung mit Wasser eine saure Umgebung bildet, vorzusehen. Es hat sich gezeigt, dass ein derartiger Ionenaustauscher in Verbindung mit einer anti-pathogenen Substanz für eine große Anzahl von Mikroorganismen schädlich ist. Zudem stellt das Filtermedium zweckmäßig keinen geeigneten Nährboden für solche Mikroorganismen dar. Durch die saure Umgebung wird die biologische Aktivität der Mikroorgansimen gestoppt bzw. zumindest reduziert, was letztlich eine verminderte Belastung der Fahrzeuginsassen bedeutet. Die anti-pathogene Substanz kann darüber hinaus beispielsweise Pollenpartikel und sonstige Allergene, die nicht vollständig von dem Filtermaterial zurückgehalten werden können, zumindest teilweise unschädlich machen.

Besonders vorteilhaft ist dabei eine Ausführungsform, bei der die anti-pathogene Substanz und der Ionenaustauscher in einer einzigen Beschichtung und/oder in einer einzigen Lage oder Schicht des Filtermaterials ausgebildet sind. Hierdurch erhält das Filtermaterial eine hohe Funktionsdichte. Die Beschichtung ist dabei vorzugsweise keine reine Oberflächenbeschichtung des Filtermaterials, sondern eine Tiefenbeschichtung, die sich auch im Inneren des Filtermaterials befindet. Bei einem Filtermaterial aus Fasern kann sich die Beschichtung an der Oberfläche der Fasern und somit überall am und im Filtermaterial befinden.

Gemäß der Erfindung ist der Ionenaustauscher als Ionentauschlage oder Ionentauschschicht ausgestaltet, wobei diese Lage oder Schicht ihrerseits hygroskopisch ausgestaltet ist und Ionenaustauschpartikel enthält, die mit Wasser eine toxische Umgebung bilden. Als Ionenaustauscher wird ein Kationenaustauscher mit funktioneller Sulfonsäuregruppe verwendet, wobei der Kationenaustauscher vollständig (Matrix und funktionelle Gruppe) wasserlöslich ist. Der hygroskopische Kationenaustauscher adsorbiert Wasser aus der Luftströmung und setzt hierbei saure Protonen frei. Die sauren Protonen reduzieren bzw. stoppen die biologischen Aktivitäten von Bakterien, Keimen, Pilzen, Algen und sonstigen Mikroorganismen. Der Kationenaustauscher, welcher vorzugsweise aus einer sulfonierten aliphatischen und aromatischen organischen Verbindung besteht oder zumindest eine solche Verbindung aufweist, wirkt gleichermaßen wie die anti-pathogene Substanz denaturierend auf Allergene. Weiter können in der gebildeten sauren Umgebung reale Gase (Geruchsstoffe) adsorbiert werden, da es zu Wechselwirkungen zwischen den sauren Sulfonsäuregruppen und den vorwiegend basischen Grundmolekülen der realen Gase, wie Ammoniak, Trimethylamin und Triethylamin kommt.

Vorteilhaft ist eine Weiterbildung mit einem hohen Sulfonierungsgrad, bei der der Kationenaustauscher, der in Verbindung mit Wasser eine saure Umgebung bildet, beispielsweise einen pH-Wert von maximal 3,0 aufweist.

In einer weiteren vorteilhaften Ausführungsform weist die anti-pathogene Substanz antiallergene Stoffe aus antioxidativen Substanzen auf, insbesondere aus Polyphenolen, wie beispielsweise Ketachine, Tannine oder Flavanoide (auch Flavonoide). Antioxidative Stoffe wirken denaturierend auf Allergene. Derartige antioxidative Substanzen führen zum Funktionsverlust durch Änderung der Sekundär-, Tertiär- und Quartärstrucktur bei Allergenen (Proteine) und wirken daher sowohl allergendeaktivierend als auch bakterizid. Ferner kann die anti-pathogene Substanz auch ein Enzym und/oder einen jeglichen Ligand aufweisen, welcher sich an die Epitope des zu deaktivierenden Allergens andocken kann. Die Liganden bilden vorteilhafterweise eine kovalente Bindung aus, um damit das Allergen irreversibel zu deaktivieren.

Gemäß der Erfindung weist das Filtermedium zusätzlich zu der anti-pathogenen Substanz und dem Ionenaustauscher einen polymeren Vernetzer auf. Die Aufgabe des polymeren Vernetzers ist die Fixierung bzw. Vernetzung der anti-pathogenen Substanz und dem Ionenaustauscher mit dem Filtermaterial als solches. Die lösliche anti-pathogene Substanz wie auch der lösliche Ionenaustauscher können mit Hilfe des polymeren Vernetzers mit allen denkbaren Trägermaterialien fest verbunden werden. Die Vernetzung der anti-pathogenen Substanz und des lonentauschers mit einem Filterträgermaterial führt somit zu einem Produkt mit antimikrobiellen und antiallergenen Eigenschaften. Der polymere Vernetzer kann als Matrixmaterial zur Einbettung der anti-pathogenen Substanz wie auch des Ionenaustauschers fungieren. Die Matrix des eingesetzten Polymers kann jegliches bekannte polymere Grundgerüst sein, das aus kohlenwasserstoffhaltigen Wiederholungseinheiten besteht. Das bevorzugt verwendete hochsulfonierte wasserlösliche Polymer kann besonders bevorzugt Sulfonsäuregruppen sowohl in der Hauptkette als auch in den Seitengruppen enthalten, wobei die sulfonierten Gruppen vorzugsweise durch kovalente Einfachbindungen an das Grundgerüst gebunden sind. Bevorzugte typische Vertreter von wasserlöslichen Polymeren können sulfoniertes Polystyrol, sulfoniertes Polymethylstyrol, sulfoniertes Polyethylstyrol, und andere sulfonierte Stryrolderivate, sulfonierte Polyacrylsäure, sulfonierte Polymethacrylsäure, sulfonierte Polyethacrylderivate, Polyvinylsulfonsäure, und andere sulfonierte Polyvinylderivate sein. Besonders bevorzugt ist der polymere Vernetzer aus Polyvinylalkohol gebildet, wobei ein Hydrolyse- und Polymerisationsgrad einer gewünschten Wasserlöslichkeit des Polymers entsprechen muss. Polyvinylalkohole mit hohen Hydrolysegraden weisen eine geringe Löslichkeit im Wasser auf. In Wasser löslicher Polyvinylalkohol kann durch säurekatalysierte Dehydratisierung zu einem vernetzten wasserunlöslichen Folgeprodukt umgesetzt werden. Zweckmäßig kann durch die Konzentration sowie durch die Reaktionsbedingungen zur Vernetzung des polymeren Vernetzers die Vernetzungsdichte gesteuert werden, so dass eine zeitlich verzögerte, vorzugsweise weitgehend konstante oder gleichmäßige, Freisetzung der antimikrobiellen Stoffe sowie der antiallergenen Stoffe gewährleistet werden kann. Die Freisetzung der antibakteriellen und antiallergenen Wirkstoffe kann somit über einen spezifizierten Zeitraum gesteuert werden. Weiter kann eine Depotwirkung durch eine höhere Vernetzung erzielt werden, welche eine langsame, retardierte Freisetzung der Wirkstoffe über einen längeren Zeitraum in konstanter Konzentration ermöglicht. Die polymere Vernetzung und Fixierung der Wirkstoffe verhindert zudem ein sogenanntes Ausbluten bzw. eine Verflüchtigung der Wirkstoffe.

Ein erfindungsgemäßes Filterelement für einen Fahrgastinnenraumluftfilter einer Klimatisierungsanlage eines Fahrzeugs besitzt einen Filterkörper, dessen Filtermaterial mit Hilfe eines Filtermediums der vorstehend beschriebenen Art gebildet ist. Vorzugsweise ist das Filtermaterial im Filterkörper plissiert, also gefaltet. Der Filterkörper kann dabei flach und eben oder ringförmig ausgestaltet sein. Das zugehörige Filterelement ist dann als Flachfilterelement oder als Ringfilterelement ausgestaltet. Grundsätzlich sind jedoch auch beliebige andere Geometrien für den Filterkörper bzw. das Filterelement möglich, z.B. sind auch hufeisenförmige Filterelemente bekannt.

In einer weiteren vorteilhaften Ausführungsform kann das erfindungsgemäße Filterelement mehrere Filterlagen aufweisen, die entweder in direkten Kontakt miteinander stehen oder beabstandet voneinander angeordnet sind. Aneinandergrenzende Filterlagen können miteinander verklebt sein oder thermisch miteinander verbunden, z.B. durch Plastifizierung.

Eine erfindungsgemäße Beschichtungslösung zum Erzeugen einer biofunktionalen Oberflächenbeschichtung und/oder Tiefenbeschichtung eines Filtermediums es ist in Anspruch 1 beschrieben. Die Beschichtungslösung kann sowohl auf einem Filtermaterial als auch in diesem angeordnet sein. Das Filtermaterial kann als Grundmaterial beispielsweise aus einem Fasermaterial, insbesondere aus einem Gelege, einem Gewebe, einem Vlies oder einem Filz gebildet sein, wobei insbesondere chemische Fasern, wie Polyamidfasern, Polyesterfasern, Polyacrylfasern, Polypropylenfasern oder Naturfasern zum Einsatz kommen können. Die jeweils einzelnen Fasern der vorstehend genannten Fasermaterialien können von der Beschichtungslösung vollumfänglich oder zumindest teilweise ummantelt bzw. beschichtet sein. Denkbar ist, dass die Beschichtungslösung prinzipiell auf jegliches Medium aufgebracht werden kann. Beispielsweise könnte bei der Anwendung in einem Fahrzeug zusätzlich zu dem Filtermaterial an sich auch jegliche mit der einströmenden Luft in Kontakt stehende Flächen mit einer solchen Beschichtungslösung beauftragt sein. Speziell sind hier beispielsweise Innenflächen eines Filtergehäuses sowie die Innenseiten von durchströmbaren Luftkanälen denkbar.

Als Lösungsmittel (Solventien) zur Beschichtung können Wasser oder organische Lösungsmittel dienen. Bevorzugte Solventien sind Wasser, Alkohol, Diole oder Polyole niedriger C-Zahl, sowie vorzugsweise Ethanol, i-Propanol, Propylenglycol, Ethylenglycol, Glycerin, Ethylenglykolmonoethylether, Ethylenglykolmonobutylether oder eine beliebige Mischung dieser Stoffe. Ferner kann die Beschichtungslösung oberflächenaktive Substanzen wie etwa Tenside oder andere Komponenten enthalten, welche die Anordnung bzw. Verteilung einiger in der Lösung vorhandener Substanzen auf einem Filterträgermaterial verbessern sowie die Oberflächenspannung des Filtermaterials erniedrigen. In Abhängigkeit von den Oberflächeneigenschaften des Filtermaterials können sowohl kationische und/oder anionische und/oder nichtionische und/oder amphotere Tenside hinzugegeben werden. Vorzugsweise kann ein anionisches Tensid eingesetzt werden, wodurch sich die Vernetzung zwischen einem hydrophoben Filterträgermaterial, der anti-pathogenen Substanz, dem Ionenaustauscher und des polymeren Vernetzers signifikant verbessert.

Bevorzugt kann das Lösungsmittel auf einer Wasserbasis beruhen, also zu mehr als 50 Gew.-% oder zu mindestens 75 Gew.-% aus Wasser bestehen. Hierdurch Isst sich die Beschichtungslösung und somit letztlich auch die Beschichtung besonders preiswert realisieren.

In einer vorteilhaften Ausgestaltung der erfindungsgemäßen Beschichtungslösung kann die Konzentration des Ionenaustauschers, welcher beispielsweise durch Polystyrolsäure gebildet ist, in der Beschichtungslösung zwischen 1 Gew.-% und 25 Gew.-% und bevorzugt zwischen 5 Gew.-% und 10 Gew.-% liegen.

In einer weiteren vorteilhaften Ausgestaltung der Beschichtungslösung kann die Konzentration des polymeren Vernetzers, welcher beispielsweise aus Polyvinylalkohol gebildet ist, in der Beschichtungslösung zwischen 0,1 Gew.-% und 30 Gew.-% und bevorzugt zwischen 0,3 Gew.-% und 10 Gew.-% liegen.

Bei dem erfindungsgemäßen Verfahren zum Herstellen eines derartigen Filtermediums durch Beschichtung des Filtermaterials wird ein solches Filtermaterial mit der vorstehend beschriebenen Beschichtungslösung in Kontakt gebracht. Dies geschieht beispielsweise durch Aufsprühen, Einlegen bzw. Eintauchen oder Auftragen. Durch Abdampfen der Beschichtungslösung kann die anti-pathogene Substanz, der Ionenaustauscher sowie der polymere Vernetzer auf und/oder im Filtermaterial fest angeordnet werden. Weiter kann durch eine säurekatalysierte Dehydratisierung der gleiche Effekt erzielt werden. Das Filtermaterial lässt sich als ein vernetztes, wasserunlösliches Folgeprodukt beschreiben. Das heißt, dass einerseits aus löslichen Reaktionspartnern ein unlösliches Netzwerk ausgebildet wird, mit Hilfe einer fixierten Tanninsäure und andererseits, dass durch derartiges unlösliches Netzwerk die Anbindung an das Filtermaterial verstärkt ist, sowohl durch eine Wechselwirkung, als auch durch Einbettung des Polymernetzwerkes in das Filtermaterial. Der polymere Vernetzer in der Beschichtungslösung führt unter saurer Katalyse der Sulfonsäuregruppen beim Abdampfen des Lösungsmittels zur Polymerisation des Vernetzers und damit sowohl zur Einbettung als auch zur Vernetzung der Sulfonsäure mit dem polymeren Vernetzer, welcher nach der säure- und temperaturkatalysierten Vernetzung ein unlösliches zwei- und dreifach vernetztes Netzwerk ausbildet. Das Verfahren führt somit von einer löslichen Beschichtungslösung zu einer unlöslichen Beschichtung mit antimikrobiellen und antiallergenen Eigenschaften, welche fest auf und/oder in dem Filtermaterial fixiert ist. Die vorwiegenden Reaktionen bei den genannten chemischen Prozessen sind die erfindungsgemäß gewünschten Vernetzungen durch Ausbildung von sogenannten Etherbrücken bei der aliphatischen und aromatischen nukleophilen Substitution sowie die konkurrierende β-Eliminierung durch Ausbildung von konjugierten Doppelbindungen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Klimatisierungsanlage,
- Fig. 2: eine stark vereinfachte Schnittansicht eines Fahrgastinnenraumluftfilters mit einem Filterelement, das einen Filterkörper aufweist,
- Fig. 3: eine stark vereinfachte Ansicht eines Filtermediums in Form eines plissierten Filtermaterials in dreilagiger Ausbildung,
- Fig. 4: eine stark vereinfachte Ansicht des Filtermaterials,
- Fig. 5: eine stark vereinfachte Ansicht des Filtermediums, umfassend ein oberflächenbeschichtetes und tiefenbeschichtetes Filtermaterial nach Abzug eines Lösungsmittels,
- Fig. 6: eine Schnittdarstellung gemäß einer Schnittebene A-A aus Fig. 5.

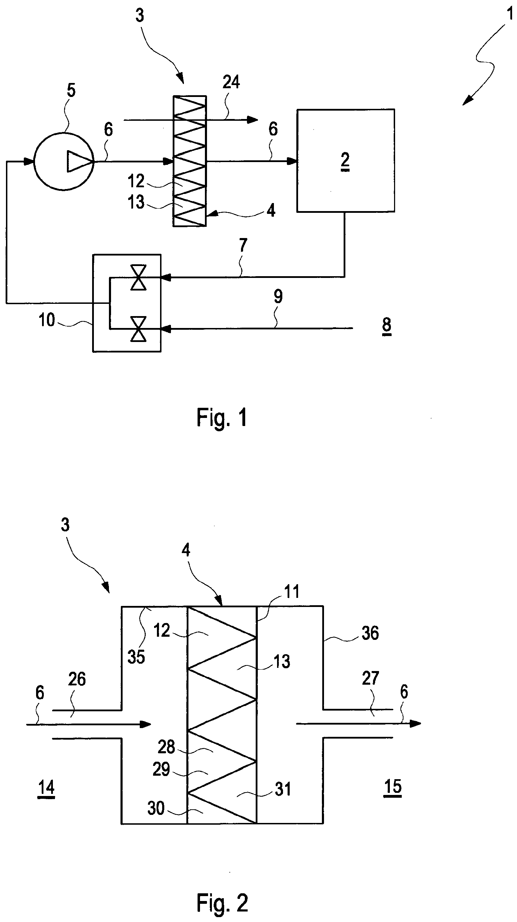

Entsprechend Fig. 1 umfasst eine Klimatisierungsanlage 1, die zur Klimatisierung eines Fahrgastinnenraumes 2 eines im Übrigen nicht gezeigten Fahrzeugs dient, einen Fahrgastinnenraumluftfilter 3, der mit wenigstens einem Innenraumluftfilterelement 4 ausgestattet ist, welches ein Filtermedium 12 aufweist. Der Fahrgastinnenraumluftfilter 3 kann im Folgenden verkürzt auch als Luftfilter 3 bezeichnet werden. Auch das Innenraumluftfilterelement 4 kann im Folgenden verkürzt auch als Filterelement 4 bezeichnet werden. Die Klimatisierungsanlage 1 umfasst ferner ein Gebläse 5 zum Erzeugen eines Luftstroms 6, der dem Fahrgastinnenraum 2 zugeführt wird. Dabei wird der Luftstrom 6 durch den Luftfilter 3 bzw. durch das Filterelement 4 hindurchgeführt, wodurch der Luftstrom 6 gefiltert bzw. gereinigt wird. Das Gebläse 5 kann dabei aus dem Fahrgastinnenraum 2 Umluft 7 ansaugen. Ferner kann das Gebläse 5 aus einer Umgebung 8 des Fahrzeugs Frischluft 9 von außen ansaugen. Mit Hilfe einer Klappeneinrichtung 10 kann zwischen einem Umluftbetrieb, bei dem nur Umluft 7 angesaugt und dem Fahrgastinnenraum 2 zugeführt wird, einem Frischluftbetrieb, bei dem nur Frischluft 9 von außen angesaugt und dem Fahrgastinnenraum 2 zugeführt wird, und einem Mischluftbetrieb umgeschaltet werden, bei dem sowohl Umluft 7 als auch Frischluft 9 angesaugt und dem Fahrgastinnenraum 2 zugeführt werden. Weitere typische Komponenten der Klimatisierungsanlage 1, wie z.B. eine Heizeinrichtung sowie eine Kühleinrichtung, sind hier zur Wahrung der Übersichtlichkeit nicht dargestellt.

Das Filterelement 4, welches in einem Filtergehäuse 36 angeordnet ist, weist einen Filterkörper 11 auf, der mit Hilfe eines Filtermediums 12, das wiederum ein Filtermaterial 13 aufweist, gebildet ist. Zweckmäßig ist das Filtermaterial 13 im Filterkörper 11 plissiert bzw. gefaltet, um eine möglichst große Oberfläche zu erreichen. Im Beispiel der Fig. 1 ist der Filterkörper 11 plattenförmig und eben dargestellt. Grundsätzlich kann auch ein ringförmiger Filterkörper 11 vorgesehen sein. Im Betrieb der Klimatisierungsanlage 1 durchströmt der Luftstrom 6 das Filterelement 4 bzw. den Filterkörper 11 und somit letztlich auch das Filtermedium 12 in einer Durchströmungsrichtung 24. Dementsprechend kann das Filtermedium 12 je nach Aufbau eine für den ordnungsgemäßen Einbauzustand bzw. Gebrauchszustand vorgesehene Durchströmungsrichtung 24 aufweisen, die eingehalten werden muss, damit das Filtermaterial 13 bzw. das damit ausgestattete Filterelement 4 die vorgesehene(n) Filtrationswirkung(en) entfalten kann.

Fig. 2 zeigt schematisch einen solchen Luftfilter 3, der aus einem Filtergehäuse 36, einem Filterkörper 11 und einem Filterelement 4 gebildet ist. Auf einer Anströmseite 14 weist das Filtergehäuse 36 eine Eingangsöffnung 26 für den Luftstrom 6 auf. Zweckmäßig ist auf einer Abströmseite 15 des Filtergehäuses 36 zudem eine Ausgangsöffnung 27, zum herausführen des Luftstroms 6 zu dem Fahrgastinnenraum 2, angeordnet. Das Filterelement 4 ist aus einem Filtermedium 12 gebildet, welches ein Filtermaterial 13 aufweist. Das Filtermaterial 13 kann als Grundmaterial beispielsweise aus einem Fasermaterial, insbesondere aus einem Gelege, einem Gewebe, einem Flies oder einem Filz gebildet sein, wobei insbesondere chemische Fasern, wie Polyamidfasern, Polyesterfasern, Polyacrylfasern, Polypropylenfasern oder Naturfasern zum Einsatz kommen können.

Das Filtermedium 12 weist zumindest eine anti-pathogene Substanz 28 sowie einen Ionenaustauscher 29 auf, welcher in Verbindung mit Wasser, das aus dem Luftstrom 6 adsorbiert wird, eine saure Umgebung 31 bildet. Der Ionenaustauscher 29 ist hygroskopisch und weist Kationenaustauscherpartikel, insbesondere mit Sulfonsäuregruppen auf. Bevorzugt ist der Ionenaustauscher 29 wasserlöslich und wird aus einer Polystyrolsulfonsäure gebildet. Die anti-pathogene Substanz 28 ist aus antioxidativen Stoffen und/oder Enzymen gebildet, insbesondere aus Polyphenolen. Am Filtermaterial 13 gehalten werden die anti-pathogene Substanz 28 und der Ionenaustauscher 29 durch einen polymeren Vernetzer 30.

Das Filtermaterial 13 ist bevorzugt mit einer Beschichtungslösung 25, die eine anti-pathogene Substanz 28, einen Ionenaustauscher 29, einen polymeren Vernetzer 30 sowie ein Lösungsmittel 32 aufweist, beschichtet. Das Filtermedium 12 stellt somit ein beschichtetes Filtermaterial 13 dar. Auf die biofunktionale Beschichtung 34 wird im Weiteren noch genauer eingegangen. Die Beschichtungslösung 25 kann optional auch mit den Innenflächen 35 des Filtergehäuses 36 sowie mit den Innenflächen von nicht gezeigten Luftkanälen, welche an den Öffnungen 26, 27 der Anströmseite 14 und der Abströmseite 15 zweckmäßig angeordnet sind, beauftragt bzw. beschichtet sein.

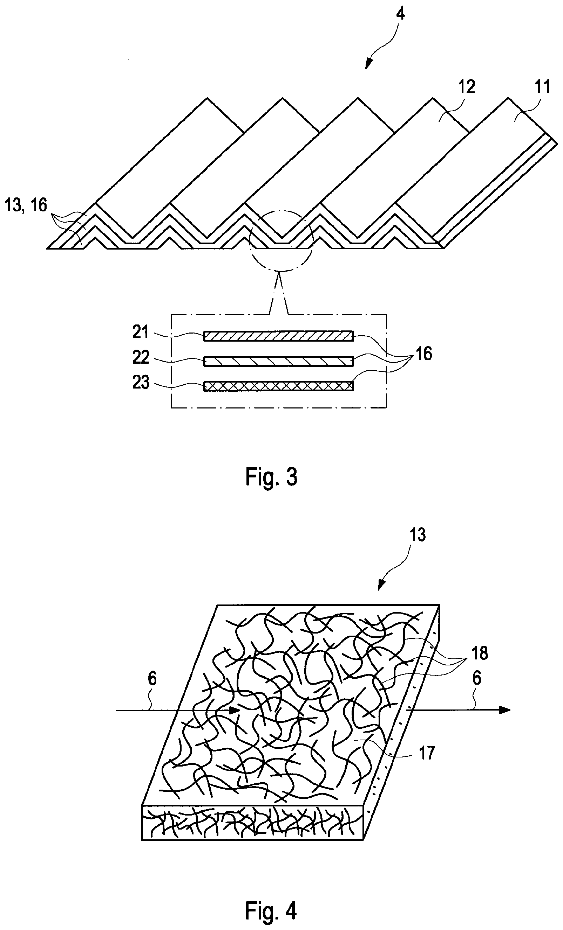

Fig. 3 zeigt schematisch ein Filterelement 4 auf, das aus mehreren Filterlagen 16 gebildet ist. Die Funktionslagen 21, 22, 23 können aus unterschiedlichen Filtermedien 12, also mit abweichenden Filtereigenschaften gebildet sein. Beispielsweise kann lediglich eine der drei Funktionslagen 21, 22, 23 die antibakteriellen und antiallergenen Wirkstoffe aus der erfindungsgemäßen Beschichtunglösung 25 aufweisen und die anderen beiden Lagen können als Partikelfilter ausgelegt sein, um beispielsweise gröbere Partikel vorzufiltrieren. Zudem besitzen die einzelnen Funktionslagen 21, 22, 23 innerhalb des Filterelements 4 eine bevorzugte Anordnung bzw. Reihenfolge, bei der vorteilhafterweise die Funktionslage 21, 22, 23, die mit der Beschichtunglösung 25 behandelt ist, nicht als erste Funktionslage 21, 22 ,23 an der Anströmseite 14 angeordnet ist. In einer beispielhaften Ausführungsform kann eine Funktionslage 21, 22, 23 aus einem Filtermedium 12 gebildet sein, das lediglich einen Ionenaustauscher (29) und einen polymeren Vernetzer (30) aufweist. Die Funktionslagen 21, 22, 23 stehen entweder in direkten Kontakt miteinander oder sind beabstandet voneinander angeordnet. Aneinandergrenzende Funktionslagen 21, 22, 23 können miteinander verklebt sein oder thermisch miteinander verbunden, z.B. durch Plastifizierung. Die Filterlage 16 als solche kann auch einteilig gebildet sein, indem die biofunktionale Beschichtung 34 nur partiell im Filtermaterial 13 angeordnet wird.

Fig. 4 zeigt schematisch ein Filtermaterial 13 mit einem aus Fasermaterial 17 ausgebildeten Gelege. Das Gelege weist eine Vielzahl von einzelnen Fasern 18 auf, welche wirr durcheinander und miteinander in Verbindung stehen. Das Filtermaterial13 zeichnet sich dadurch aus, dass ein Luftstrom 6 hindurch strömen kann. Hierbei verfangen sich teilweise die in der Luft befindlichen partikulären Verunreinigungen und werden somit daran gehindert von dem Luftstrom 6 in den Fahrgastinnenraum 2 geströmt zu werden.

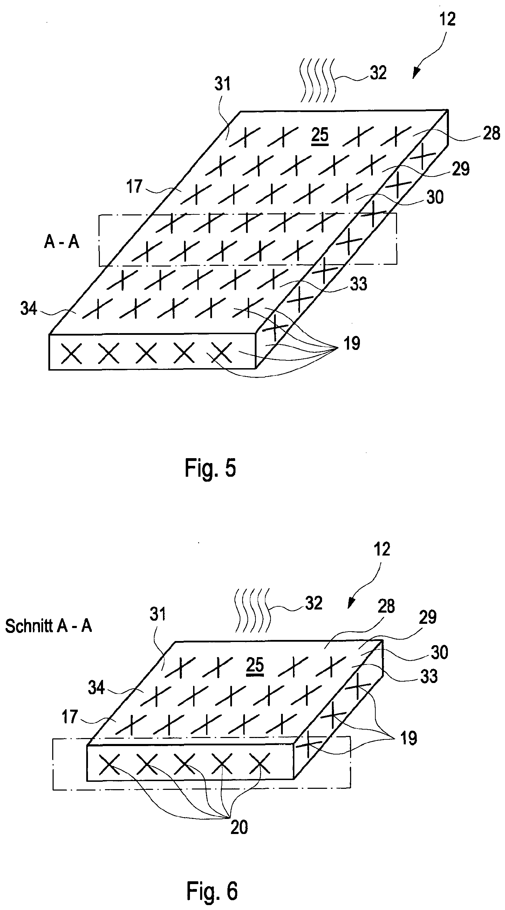

Fig. 5 zeigt schematisch ein Filtermedium 12 auf, umfassend ein Filtermaterial 13 nach Abzug eines Lösungsmittels 32 aus einer Beschichtungslösung 25. Die Beschichtungslösung 25 wird zum Erzeugen einer biofunktionalen Oberflächenbeschichtung 19 und/oder Tiefenbeschichtung 20 eines Filtermaterials 13 eingesetzt. Das beschichtete Filtermaterial 13 wird nach Abdampfen unter saurer Katalyse des Lösungsmittels 32 als Filtermedium 12 bezeichnet. Die Beschichtungslösung 25 weist in einem Lösungsmittel 32 eine anti-pathogenen Substanz 28, einen Ionenaustauscher 29 und einen polymeren Vernetzer 30 auf, wobei die anti-pathogene Substanz 28 aus einem antiallergenen Stoff und der Ionenaustauscher 29 sowohl antiallergene als auch antibakterielle Eigenschaften aufweist und bevorzugt eine stark saure funktionelle Sulfonsäuregruppe enthält oder zumindest aus dieser gebildet ist. Die einzelnen Fasern 18 des Filtermaterials 13 werden mit der biofunktionalen Beschichtung 34 vollumfänglich oder zumindest teilweise ummantelt bzw. beschichtet. Durch Abzug des Lösungsmittels 32 aus der Beschichtungslösung 25 sowie durch säurekatalysierte Reaktion mit der Sulfonsäuregruppe des Kationenaustauschers wird aus dem vorher wasserlöslichen polymeren Vernetzer 30 ein wasserunlöslicher polymerer Vernetzer 30, der sowohl die anti-pathogene Substanz 28 als auch den Ionenaustauscher 29 fest an das Fasermaterial 17 bindet. Die lösliche anti-pathogene Substanz 28 wie auch der lösliche Ionenaustauscher 29 können mit Hilfe des polymeren Vernetzers 30 mit allen denkbaren Trägermaterialien fest verbunden werden. Die Vernetzung der anti-pathogenen Substanz 28 und des lonentauschers 29 mit dem Filtermaterial 13 führt somit zu einem derartigen Filtermedium 12 mit antimikrobiellen und antiallergenen Eigenschaften. Der polymere Vernetzer 30 kann als Matrixmaterial zur Einbettung der anti-pathogenen Substanz 28 wie auch des Ionenaustauschers 29 fungieren. Durch die jeweilige Konzentration des polymeren Vernetzers 30 in der Beschichtungslösung 25 kann eine Vernetzungsdichte gesteuert werden, so dass eine zeitliche konstante, gleichmäßige Freisetzung der antimikrobiellen Stoffe sowie der antiallergenen Stoffe gewährleistet werden kann.

Das Lösungsmittel 32 in der Beschichtungslösung 25 weist bevorzugt anionische Tenside 33 auf, die zu einer verbesserten Anordnung bzw. Verteilung, der antipathoghenen Substanz 28, des Ionenaustauschers 29 sowie des polymeren Vernetzers 30, auf dem Filtermaterial 13 führen. Weiter liegt die Konzentration des Ionenaustauschers 29 in der Beschichtungslösung 25 zwischen 1 Gew.-% und 25 Gew.-% und bevorzugt zwischen 5 Gew.-% und 10 Gew.-%. Die Konzentration des polymeren Vernetzers 30 in der Beschichtungslösung 25 liegt zwischen 0,1 Gew.-% und 30 Gew.-% und bevorzugt zwischen 0,3 Gew.-% und 10 Gew.-%

Fig. 6 zeigt eine schematische Schnittdarstellung des Filtermediums 12 aus der vorangehenden Fig. 5. Mit dieser Schnittdarstellung soll verdeutlicht werden, dass die biofunktionale Beschichtung 34 nicht nur als Oberflächenbeschichtung 19 dient sondern maßgeblich auch als Tiefenbeschichtung 20. Die anti-pathogene Substanz 28 und der Ionenaustauscher 29 befinden sich somit auch eingebettet im polymeren Vernetzer 30 im inneren des Filtermaterials 13.

## Patentansprüche

1. Beschichtungslösung (25) zum Erzeugen einer biofunktionalen Oberflächenbeschichtung (19) und/oder Tiefenbeschichtung (20) eines Filtermediums (12), **dadurch gekennzeichnet,**
**dass** die Beschichtungslösung (25) in einem Lösungsmittel (32) eine anti-pathogenen Substanz (28), einen Ionenaustauscher (29) und einen polymeren Vernetzer (30) aufweist, wobei der Ionenaustauscher (29) hygroskopisch ist und funktionelle Kationenaustauschergruppen mit Sulfonsäuregruppen aufweist.

2. Beschichtungslösung nach Anspruch 1,
**dadurch gekennzeichnet,**
**dass** das Lösungsmittel (32) zumindest ein Stoff aus folgender Gruppe aufweist: Wasser, Alkohol, Diole, Polyole, Ethanol, i-Propanol, Propylenglycol, Ethylenglycol, Glycerin, Ethylenglykolmonoethylether, Ethylenglykolmonobutylether oder aus einer beliebigen Mischungen dieser Stoffe gebildet ist,

3. Beschichtungslösung nach Anspruch 1 oder 2,
**dadurch gekennzeichnet,**
**dass** das Lösungsmittel (32) kationische und/oder anionische und/oder nichtionische und/oder amphotere Tenside (33), bevorzugt anionische Tenside (33) aufweist.

4. Beschichtungslösung nach einem der Ansprüche 1 bis 3,
**dadurch gekennzeichnet,**
**dass** das Lösungsmittel (32) zu mehr als 50 Gew.-% aus Wasser besteht.

5. Beschichtungslösung nach einem der Ansprüche 1 bis 4,
**dadurch gekennzeichnet,**
- **dass** die Konzentration des Ionenaustauschers (29) in der Beschichtungslösung (25) zwischen 1 Gew.-% und 25 Gew.-% und bevorzugt zwischen 5 Gew.-% und 10 Gew.-% liegt, und/oder
- **dass** die Konzentration des polymeren Vernetzers (30) in der Beschichtungslösung (25) zwischen 0,1 Gew.-% und 30 Gew.-% und bevorzugt zwischen 0,3 Gew.-% und 10 Gew.-% liegt.

6. Verfahren zum Herstellen eines ein Filtermaterial (13) aufweisenden Filtermediums (12),
**dadurch gekennzeichnet,**
- **dass** das Filtermaterial (13) mit einer anti-pathogenen Substanz (28), einem Ionenaustauscher (29) und einem polymeren Vernetzer (30) in Kontakt gebracht wird,
- **dass** zum Kontaktieren des Filtermaterials (13) mit der anti-pathogenen Substanz (28), dem Ionenaustauscher (29) und dem polymeren Vernetzer (30) die Beschichtungslösung (25) nach einem der Ansprüche 1 bis 5 verwendet wird, mit der das Filtermaterial (13) in Kontakt gebracht wird,
- **dass** durch Abdampfen des Lösungsmittels (32) die anti-pathogene Substanz (28), der Ionenaustauscher (29) sowie der polymere Vernetzer (30) auf und/oder im Filtermaterial (13) fest angeordnet werden,
- **dass** der Vernetzer (30) und der Ionenaustauscher (29) so aufeinander abgestimmt sind, dass der Ionenaustauscher (29) den Vernetzer (30) aktiviert, um die anti-pathogene Substanz (28) und den Ionenaustauscher (29) am Filtermaterial (13) zu fixieren,
- wobei der Ionenaustauscher (29) hygroskopisch ist und funktionelle Kationenaustauschergruppen mit Sulfonsäuregruppen aufweist.

7. Verfahren nach Anspruch 6,
**dadurch gekennzeichnet,**
**dass** der polymere Vernetzer (30) im nicht vernetzten Zustand ein wasserlöslicher Vernetzer (30) ist, der durch seine Aktivierung zu einem wasserunlöslichen Vernetzer (30) umgesetzt wird.

8. Verfahren nach Anspruch 7,
**dadurch gekennzeichnet,**
**dass** die Aktivierung des wasserlöslichen Vernetzers (30) durch säurekatalysierte Dehydratisierung erfolgt.

9. Verwendung einer Beschichtungslösung (25) nach einem der Ansprüche 1 bis 5 zum Herstellen eines Filtermediums (12).

10. Verwendung nach Anspruch 9,
**dadurch gekennzeichnet,**
- **dass** die Beschichtungslösung (25) zum Herstellen eines Filtermediums (12) für ein Filterelement (4) verwendet wird, und/oder
- **dass** die Beschichtungslösung (25) zum Herstellen eines Filterelements (4) verwendet wird, das ein Filtermedium (12) aufweist.

11. Filtermedium (12) mit einem Filtermaterial (13) zum Filtern von Fahrgastinnenraumluft des Kraftfahrzeugs, wobei das Filtermedium (12) mit einem Verfahren nach einem der Ansprüche 6 bis 8 hergestellt ist.

12. Filtermedium nach Anspruch 11,
**dadurch gekennzeichnet,**
- **dass** die anti-pathogene Substanz (28) und der Ionenaustauscher (29) in einer einzigen Beschichtung (34) und/oder in einer einzigen Lage oder Schicht des Filtermaterials (13) ausgebildet sind, und/oder
- **dass** der Ionenaustauscher (29) aus einer wasserlöslichen mit einer Ionenaustauscherkapazität aufweisenden sulfonierten aliphatischen und aromatischen organischen Verbindung besteht oder zumindest aus dieser gebildet ist.

13. Filtermedium nach Anspruch 11 oder 12,
**dadurch gekennzeichnet,**
- **dass** die anti-pathogene Substanz (28) antibakteriell und antiallergen wirkt, und/oder
- **dass** die anti-pathogene Substanz (28) aus antioxidativen Stoffen und/oder Enzymen und/oder geeigneten Liganden gebildet ist, und/oder
- **dass** die anti-pathogene Substanz (28) Polyphenole aufweist oder durch Polyphenole gebildet ist.

14. Filtermedium nach einem der Ansprüche 11 bis 13,
**dadurch gekennzeichnet,**
- **dass** der polymere Vernetzer (30) für die anti-pathogene Substanz (28) und den Ionenaustauscher (29) als retardierende Matrix wirkt und/oder als ein Matrixmaterial fungiert und die darin gebundene anti-pathogene Substanz (28) sowie den Ionenaustauscher (29) über einen vorbestimmten Zeitraum freizetzt.

15. Filterelement (4) für einen Fahrgastinnenraumluftfilter (3) einer Klimatisierungsanlage (1) eines Fahrzeugs, das ein Filtermedium (12) nach einem der Ansprüche 11 bis 14 aufweist, wobei, vorzugsweise, das Filterelement (4) mehrere Filterlagen (16) aufweist, welche jeweils das Filtermedium (12) nach einem der Ansprüche 11 bis 14 aufweisen.

## Claims

1. A coating solution (25) for producing a biofunctional surface coating (19) and/or depth coating (20) of a filter medium (12), **characterized in that** the coating solution (25) has in a solvent (32) an anti-pathogenic substance (28), an ion exchanger (29) and a polymeric cross-linking agent (30), wherein the ion exchanger (29) is hygroscopic and has functional cation exchanger groups with sulphonic acid groups.

2. The coating solution according to Claim 1, **characterized in that** the solvent (32) has at least one substance from the following group: water, alcohol, diols, polyols, ethanol, i-propanol, propylene glycol, ethylene glycol, glycerine, ethylene glycol monoethyl ether, ethylene glycol monobutyl ether, or is formed from an arbitrary mixture of these substances.

3. The coating solution according to Claim 1 or 2, **characterized in that** the solvent (32) has cationic and/or anionic and/or non-ionic and/or amphoteric tensides (33), preferably anionic tensides (33).

4. The coating solution according to one of Claims 1 to 3, **characterized in that** the solvent (32) consists of water at more than 50 % by weight.

5. The coating solution according to one of Claims 1 to 4, **characterized in that**
- the concentration of the ion exchanger (29) in the coating solution (25) lies between 1 % by weight and 25 % by weight and preferably between 5 % by weight and 10 % by weight, and/or
- the concentration of the polymeric cross-linking agent (30) in the coating solution (25) lies between 0.1 % by weight and 30 % by weight and preferably between 0.3 % by weight and 10 % by weight.

6. A method for producing a filter medium (12) having a filter material (13), **characterized in that**
- the filter material (13) is brought in contact with an anti-pathogenic substance (28), an ion exchanger (29) and a polymeric cross-linking agent (30),
- for contacting the filter material (13) with the anti-pathogenic substance (28), the ion exchanger (29) and the polymeric cross-linking agent (30), the coating solution (25) according to Claims 1 to 5 is used, with which the filter material (13) is brought in contact,
- by vaporizing of the solvent (32), the anti-pathogenic substance (28), the ion exchanger (29) and the polymeric cross-linking agent (30) are securely arranged on and/or in the filter material (13),
- the cross-linking agent (30) and the ion exchanger (29) are coordinated with one another so that the ion exchanger (29) activates the cross-linking agent (30), in order to fix the anti-pathogenic substance (28) and the ion exchanger (29) on the filter material (13),
- wherein the ion exchanger (29) is hygroscopic and has functional cation exchanger groups with sulphonic acid groups.

7. The method according to Claim 6, **characterized in that** the polymeric cross-linking agent (30) in the non-cross-linked state is a water-soluble cross-linking agent (30), which through its activation is converted to a water-insoluble cross-linking agent (30).

8. The method according to Claim 7, **characterized in that** the activation of the water-soluble cross-linking agent (30) takes place by acid-catalysed dehydration.

9. A use of a coating solution (25) according to one of Claims 1 to 5 for the production of a filter medium (12) .

10. The use according to Claim 10, **characterized in that**
- the coating solution (25) for producing a filter medium (12) for a filter element (4) is used, and/or
- the coating solution (25) for producing a filter element (4) is used, which has a filter medium (12) .

11. A filter medium (12) with a filter material (13) for filtering air in the passenger compartment of the motor vehicle, wherein the filter medium (12) is produced by a method according to one of Claims 6 to 8.

12. The filter medium according to Claim 11, **characterized in that**
- the anti-pathogenic substance (28) and the ion exchanger (29) are formed in a single coating (34) and/or in a single ply or layer of the filter material (13), and/or
- the ion exchanger (29) consists of a water-soluble sulphonated aliphatic and aromatic organic compound with an ion exchanger capacity, or is at least formed therefrom.

13. The filter medium according to Claim 11 or 12, **characterized in that**
- the anti-pathogenic substance (28) acts in an antibacterial and antiallergenic manner, and/or
- the anti-pathogenic substance (28) is formed from antioxidative materials and/or enzymes and/or suitable ligands, and/or
- the anti-pathogenic substance (28) has polyphenols or is formed by polyphenols.

14. The filter medium according to one of Claims 11 to 13, **characterized in that**
- the polymeric cross-linking agent (30) for the anti-pathogenic substance (28) and the ion exchanger (29) acts as a retarding matrix and/or functions as a matrix material and releases the anti-pathogenic substance (28) connected therein and the ion exchanger (29) over a predetermined period of time, and/or
- the filter element (4) has a plurality of filter plies (16), which respectively have the filter medium (12).

15. A filter element (4) of a passenger compartment air filter (3) of an air-conditioning system (1) of a vehicle, which has a filter medium (12) according to one of Claims 11 to 14.

## Revendications

1. Solution de revêtement (25) destinée à la production d'un revêtement de surface biofonctionnel (19) et/ou d'un revêtement profond (20) d'un milieu filtrant (12),
**caractérisée en ce que**
la solution de revêtement (25) présente, dans un solvant (32), une substance anti-pathogène (28), un échangeur d'ions (29) et un agent de réticulation polymère (30), dans laquelle l'échangeur d'ions (29) est hygroscopique et présente des groupes fonctionnels échangeurs de cations avec des groupes acide sulfonique.

2. Solution de revêtement selon la revendication 1,
**caractérisée en ce que**
le solvant (32) présente au moins une substance issue du groupe suivant : eau, alcool, diols, polyols, éthanol, i-propanol, propylène glycol, éthylène glycol, glycérol, éther monoéthylique d'éthylène glycol, éther monobutylique d'éthylène glycol ou un mélange quelconque desdites substances.

3. Solution de revêtement selon la revendication 1 ou 2,
**caractérisée en ce que**
le solvant (32) présente des tensioactifs cationiques et/ou anioniques et/ou non ioniques et/ou amphotères (33), de manière préférée des tensioactifs anioniques (33).

4. Solution de revêtement selon l'une quelconque des revendications 1 à 3,
**caractérisée en ce que**
le solvant (32) est constitué de plus de 50 % en poids d'eau.

5. Solution de revêtement selon l'une quelconque des revendications 1 à 4, **caractérisée en ce que**
- la concentration de l'échangeur d'ions (29) dans la solution de revêtement (25) est comprise entre 1 % en poids et 25 % en poids et de manière préférée entre 5 % en poids et 10 % en poids, et/ou
- la concentration de l'agent de réticulation polymère (30) dans la solution de revêtement (25) est comprise entre 0,1 % en poids et 30 % en poids et de manière préférée entre 0,3 % en poids et 10 % en poids.

6. Procédé destiné à produire un milieu filtrant (12) présentant un matériau de filtration (13),
**caractérisé en ce que**
- le matériau de filtration (13) est mis en contact avec une substance anti-pathogène (28), un échangeur d'ions (29) et un agent de réticulation polymère (30),
- la solution de revêtement (25) selon l'une quelconque des revendications 1 à 5 est utilisée et mise en contact avec le matériau de filtration (13) en vue de la mise en contact du matériau de filtration (13) avec la substance anti-pathogène (28), l'échangeur d'ions (29) et l'agent de réticulation polymère (30),
- grâce à l'évaporation du solvant (32), la substance anti-pathogène (28), l'échangeur d'ions (29) et l'agent de réticulation polymère (30) sont immobilisés sur et/ou dans le matériau de filtration (13),
- l'agent de réticulation (30) et l'échangeur d'ions (29) sont ajustés l'un par rapport à l'autre de sorte que l'échangeur d'ions (29) active l'agent de réticulation (30) afin de fixer la substance anti-pathogène (28) et l'échangeur d'ions (29) sur le matériau de filtration (13),
- dans lequel l'échangeur d'ions (29) est hygroscopique et présente des groupes fonctionnels échangeurs de cations avec des groupes acide sulfonique.

7. Procédé selon la revendication 6,
**caractérisé en ce que**
l'agent de réticulation polymère (30) à l'état non réticulé est un agent de réticulation (30) soluble dans l'eau qui est converti en un agent de réticulation (30) insoluble dans l'eau de par son activation.

8. Procédé selon la revendication 7,
**caractérisé en ce que**
l'activation de l'agent de réticulation (30) soluble dans l'eau résulte d'une déshydratation catalysée par un acide.

9. Utilisation d'une solution de revêtement (25) selon l'une quelconque des revendications 1 à 5 pour produire un milieu filtrant (12).

10. Utilisation selon la revendication 9,
**caractérisée en ce que**
- la solution de revêtement (25) est utilisée pour produire un milieu filtrant (12) destiné à un élément de filtration (4), et/ou
- la solution de revêtement (25) est utilisée pour produire un élément de filtration (4) présentant un milieu filtrant (12).

11. Milieu filtrant (12) avec un matériau de filtration (13) destiné à filtrer de l'air d'habitacle du véhicule automobile, dans lequel le milieu filtrant (12) est produit en utilisant un procédé selon l'une quelconque des revendications 6 à 8.

12. Milieu filtrant selon la revendication 11,
**caractérisé en ce que**
- la substance anti-pathogène (28) et l'échangeur d'ions (29) sont agencés au sein d'un revêtement (34) unique et/ou au sein d'une strate ou couche unique du matériau de filtration (13), et/ou
- l'échangeur d'ions (29) est constitué d'un composé organique aliphatique et aromatique sulfoné soluble dans l'eau et présentant une capacité d'échange ionique, ou est au moins formé à partir de celui-ci.

13. Milieu de filtration selon la revendication 11 ou 12,
**caractérisé en ce que**
- la substance anti-pathogène (28) a une action antibactérienne et antiallergique, et/ou
- la substance anti-pathogène (28) est formée à partir de substances antioxydantes et/ou d'enzymes et/ou de ligands appropriés, et/ou
- la substance anti-pathogène (28) présente des polyphénols ou est formée de polyphénols.

14. Milieu de filtration selon l'une quelconque des revendications 11 à 13,
**caractérisé en ce que**
- l'agent de réticulation polymère (30) destiné à la substance anti-pathogène (28) et à l'échangeur d'ions (29) agit comme une matrice retardatrice et/ou se comporte comme un matériau de matrice et libère la substance anti-pathogène (28) à laquelle il est lié ainsi que l'échangeur d'ions (29) sur une période prédéterminée.

15. Élément de filtration (4) destiné à un filtre à air d'habitacle (3) d'un système de climatisation (1) d'un véhicule, présentant un milieu filtrant (12) selon l'une quelconque des revendications 11 à 14, dans lequel l'élément de filtration (4) présente de manière préférée plusieurs couches de filtration (16) présentant respectivement le milieu filtrant (12) selon l'une quelconque des revendications 11 à 14.
